# EUROPEAN PATENT APPLICATION

(11) **EP 3 260 383 A1**
(43) Date of publication of application: **27.12.2017**
(21) Application number: 16752372.9
(22) Date of filing: 10.02.2016
(51) Int. Cl.: B65B 51/10, B65B 9/20

(54) **PACKING/FILLING APPARATUS**

(30) Priority: 20.02.2015 JP 2015031462
(71) Applicant: Tetra Laval Holdings & Finance S.A., 1009 Pully (CH)
(72) Inventor: MORIYAMA, Yasuyuki, Tokyo 102-0071 (JP); IMURA, Daisuke, Tokyo 102-0071 (JP); MOGI, Reona, Tokyo 102-0071 (JP)
(74) Representative: Tetra Pak - Patent Attorneys SE
(86) International application number: PCT/JP2016/053934
(87) International publication number: WO 2016/132986

(57) **Abstract**

The present invention provides a packaging and filing device able to achieve favorable sealing by ultrasonic sealing.

A packaging and filing device for filling a liquid food using a band-shaped packaging material to form a packaging container for housing the liquid food, said packaging and filing device comprising a sealing device including an ultrasound supply unit for supplying ultrasound and an anvil as a support jig, wherein
the band-shaped packaging material is gripped by an ultrasound supply surface of the ultrasound supply unit and a supporting surface of the anvil, ultrasound is applied to the band-shaped packaging material to seal the band-shaped packaging material, and the supporting surface of the anvil has a smooth shape so that an angular portion of a region is smooth, said region being adjacent to a contact part which contacts the band-shaped packaging material during sealing.

## Description

### Technical Field

The present invention relates to a packaging and filing device for filling a liquid food or the like to a packaging container.

### Background Art

When a packaging container for receiving a liquid food such as a fermented beverage, milk, mineral water, tea, juice, soup or alcohol etc. is produced, a packaging laminate material in the form of a web (in the form of a band) is used, and the packaging laminate material is sealed by heat sealing or ultrasonic sealing etc., whereby a packaging container is formed. For example, in a packaging and filing device, the packaging laminate material is molded into a tube shape and sealed in a lengthwise direction (longitudinal direction) by a longitudinal sealing device, after which the packaging laminate material is sealed in a transverse direction by a transverse sealing device while the inside of said material is filled with a liquid food, then the sealed material is cut to form a pillow-shaped pre-molded container which is further molded into a final shape to complete the packaging container.

[] It is known to perform to perform heat sealing by using a heater or inductor etc., in a transverse sealing device, and also known to perform ultrasonic sealing by using ultrasound in a transverse sealing device (see Patent Reference 1).

### Prior Art References

### Patent Reference

Patent Reference 1 JP 2003-221016 A

### Summary of the Invention

### Problem to be Solved by the Invention

The present invention aims to provide a packaging and filing device which achieves reliable sealing by using ultrasonic sealing.

### Means for Solving the Problem

A packaging and filing device according to one aspect of the present invention fills a band-shaped packaging material with a liquid food and forms a packaging container for housing the liquid food, and comprises a sealing device including an ultrasound supply unit for supplying ultrasound and an anvil as a support jig, the band-shaped packaging material being gripped by an ultrasound supply surface of the ultrasound supply unit and a supporting surface of the anvil and ultrasound being applied to the band-shaped packaging material to seal the band-shaped packaging material, and the supporting surface of the anvil has a smooth shape so that an angular portion of a region is smooth, said region adjacent to a contact portion which contacts the band-shaped packaging material during sealing.

In the abovementioned packaging and filing device, the smooth shape is a vertical angle of the angular portion, said vertical angle of the angular is within a range of 155-175°.

In the abovementioned packaging and filing device, the angular portion is beveled

In the abovementioned packaging and filing device, a predetermined region constituting part of the supporting surface of the anvil may constitute the smooth shape.

In the abovementioned packaging and filing device, the predetermined regions are two regions for gripping edge portions of the band-shaped packaging material, said two regions being separated by a predetermined distance from a center of the supporting surface of the anvil.

In the abovementioned packaging and filing device, the sealing device may seal the band-shaped packaging material in a direction orthogonal to the lengthwise direction of the band-shaped packaging material.

### Effects of the Invention

According to the present invention as described above, it is possible to achieve favorable sealing by ultrasonic sealing because a supporting surface of an anvil has a shape without an angled portion in a region adjacent to a contact portion which contacts a band-shaped packaging material during sealing.

### Brief Description of the Drawings

Figure 1 is a perspective view showing an outline of a packaging and filing device according to an embodiment of the present invention.
Figure 2 is an explanatory diagram of a transverse sealing device in the packaging and filing device according to an embodiment of the present invention.
Figure 3 illustrates an ultrasonic horn in the transverse sealing device of the packaging and filing device according to an embodiment of the present invention.
Figure 4 is a perspective view showing the main parts of the transverse sealing device in the packaging and filing device according to an embodiment of the present invention.
Figure 5 is a plan view showing the main parts of the transverse sealing device in the packaging and filing device according to an embodiment of the present invention.
Figure 6 shows an anvil of the transverse sealing device in the packaging and filing device according to an embodiment of the present invention.
Figure 7 is a view showing a cross section (1) of the anvil of the transverse sealing device in the packaging and filing device according to an embodiment of the present invention.
Figure 8 is a view showing a cross section (2) of the anvil of the transverse sealing device in the packaging and filing device according to an embodiment of the present invention.
Figure 9 is a view showing a cross section (3) of the anvil of the transverse sealing device in the packaging and filing device according to an embodiment of the present invention.

### Detailed Description

A packaging and filing device according to an embodiment of the present invention will be described with the drawings.

### (Outline of a packaging and filing device)

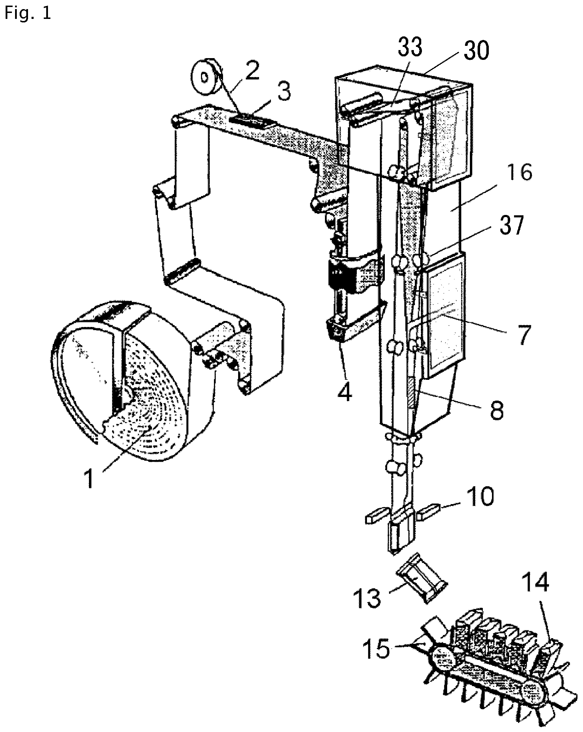

Firstly, an outline of a packaging and filing device will be described with fig. 1.

A band-shaped packaging laminate material 1 is supplied to the packaging and filing device in the form of a reel. The packaging laminate material 1 comprises a flexible laminate including a paper base material and a polyethylene resin which is laminated on both surfaces of the paper base material, and if need, a barrier layer comprising aluminum foil or a resin having gas barrier properties or the like is formed between the paper base material and the film, and text or a design etc. is preprinted in a region corresponding to the surface of a packaging container 14, as required.

The packaging laminate material 1 which has been fed out is continuously conveyed by a feed device serving as a conveyance means, and is fed to a strip adhesion device 3 via a banding roller and a damper roller etc., and a strip 2 is adhered along one edge portion of the packaging laminate material 1 by the strip adhesion device.

Then, the packaging laminate material 1 attaches a pull-tab thereto, as required, by a pull-tab adhesion device. The packaging laminate material 1 is fed to a disinfection tank 4 and is disinfected by a disinfectant such as hydrogen peroxide in the disinfection tank 4.

It is noted that sterilization may be performed by electron beam irradiation, instead of disinfection using a disinfectant such as hydrogen peroxide.

Then, the packaging laminate material 1 is fed to an upper chamber 30, is dried by an air knife 33 inside the upper chamber 30, and is fed into a sterile compartment 16 after drying.

Then, the packaging laminate material 1 is gradually deformed by a forming ring 37 or the like and is formed into a tubular shape.

Then, the packaging laminate material 1 is preheated by hot air from a preheating means of a longitudinal sealing device 8 and sealed in a longitudinal direction, then a liquid food supplied through a filling pipe 7 is filled with the inside of the tubular packaging laminate material 1.

Then, the tubular packaging laminate material 1 filled with the liquid food is guided by rollers and fed to a transverse sealing device 10, and is gripped and sealed in the transverse direction. The transversely-sealed packaging laminate material is cut by a cutting blade or the like and a pillow-shaped pre-molded container 13 is formed. The pre-molded container 13 is conveyed by of a final molding conveyance device 15 and molded to a final shape, and the packaging container 14 housing the liquid food is completed.

### (Transverse sealing device of the packaging and filing device)

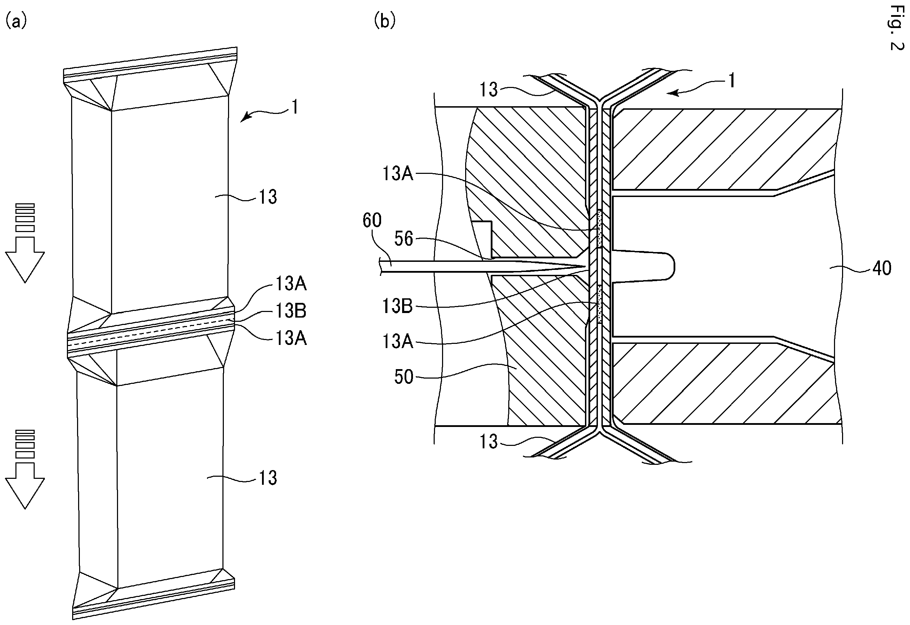

Next, the transverse sealing device 10 of the packaging and filing device will be described with the fig. 2.

The transverse sealing device 10 according to this embodiment seals the tubular packaging laminate material 1 by ultrasonic sealing. An ultrasonic horn 40 for supplying ultrasound and an anvil 50 as a support jig are located to face each other and the packaging laminate material 1 is made to pass therebetween.

During transverse sealing, the packaging laminate material 1 is stopped for a time and the packaging laminate material 1 is gripped by the anvil 50 and the ultrasonic horn 40. The packaging laminate material 1 is transversely sealed at two neighboring sealing portions 13A, 13A by ultrasound from the ultrasonic horn 40. A cut portion 13B between the two sealing portions 13A, 13A which have been transversely sealed is cut by a cutting blade 60, and the pillow-shaped premolded container 13 is formed.

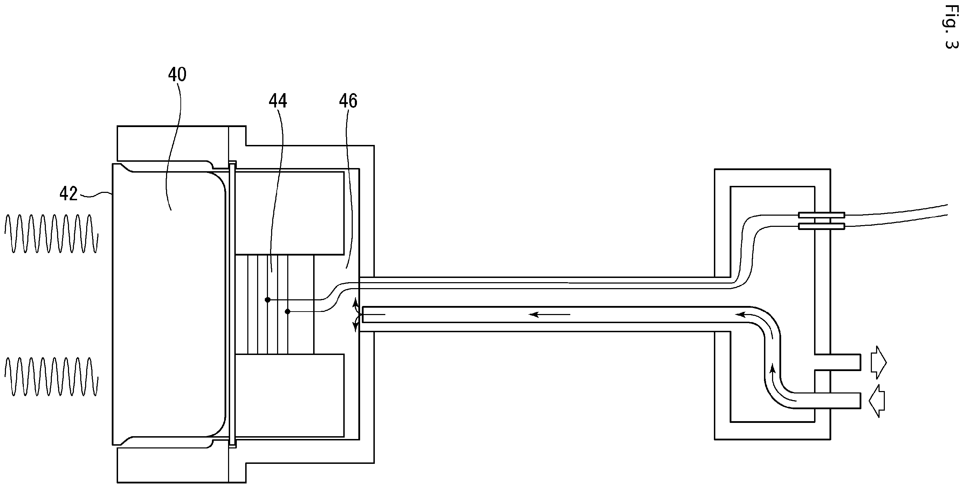

Next, the ultrasonic horn 40 of the transverse sealing device 10 will be described in detail with fig. 3.

A piezoelectric element 44 which extends and shrinks when a voltage is applied thereto, is provided on the opposite side of an ultrasonic supply surface 42 of the ultrasonic horn 40. An air compartment 46 in which compressed air is enclosed, is provided on the opposite side of the ultrasonic supply surface 42 of the ultrasonic horn 40 including the piezoelectric element 44. The pressure in the air compartment 46 is adjusted and cooling is performed.

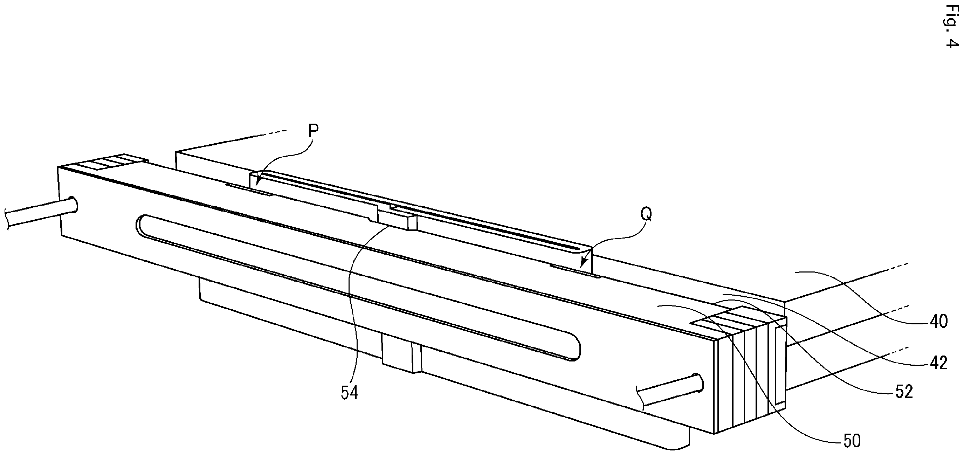

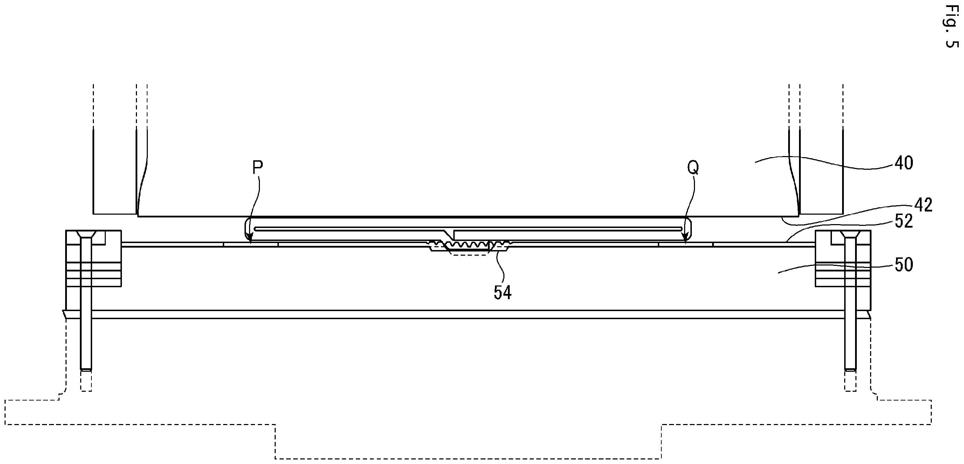

Next, the main parts of the transverse sealing device 10 will be described with fig. 4 and fig. 5.

According to this embodiment, the transverse width of the packaging laminate material 1 which is transversely sealed is 60-160 mm, for example.

The ultrasound supply surface 42 of the ultrasonic horn 40 has a rectangular shape with a width of 150-200 mm and a length of 10-20 mm, for example.

A supporting surface 52 of the anvil 50 as a support jig for the ultrasonic horn 40, has essentially the same size and shape as the ultrasound supply surface 42 of the ultrasonic horn 40, for example a rectangular shape with a width of 150-200 mm and a length of 10-20 mm.

In the transverse sealing device 10 according to this mode of embodiment, the shape of regions in which the edge portions of the packaging laminate material 1 are gripped is modified on the supporting surface 52 of the anvil 50 constituting a support jig.

As showed in fig. 4 and fig. 5, the edge portions of the packaging laminate material 1 are gripped in regions P, Q at a predetermined distance from the center of the supporting surface 52 of the anvil 50. The shape of the supporting surface 52 of the anvil 50 in these regions P, Q differs from the shape of the supporting surface 52 of the anvil 50 in other regions.

The regions P, Q are at a distance of 30-80 mm, for example, from the center of the anvil 50, the length thereof being 10-20 mm, for example.

In the transverse sealing device 10 according to this embodiment, a recess 54 for housing an overlap portion of the packaging laminate material 1 is formed in the center of the supporting surface 52 of the anvil 50 as a support jig. When the packaging laminate material 1 is gripped by the ultrasonic horn 40 and the anvil 50, the overlap portion is received in the recess 54 and ultrasound is uniformly transmitted to the whole of the transverse sealing portion of the packaging laminate material 1.

The packaging laminate material 1 is gripped by the ultrasonic horn 40 and the anvil 50 during transverse sealing. Ultrasound at an optimum frequency and amplitude are supplied from the ultrasonic horn 40 to the packaging laminate material 1 to be sealed, and the packaging laminate material 1 is transversely sealed. Ultrasound at a frequency of 15-40 kHz and an amplitude of 10-40 µm is supplied from the ultrasonic horn 40 for a time of 10-500 msec, for example.

### (Anvil of the transverse sealing device)

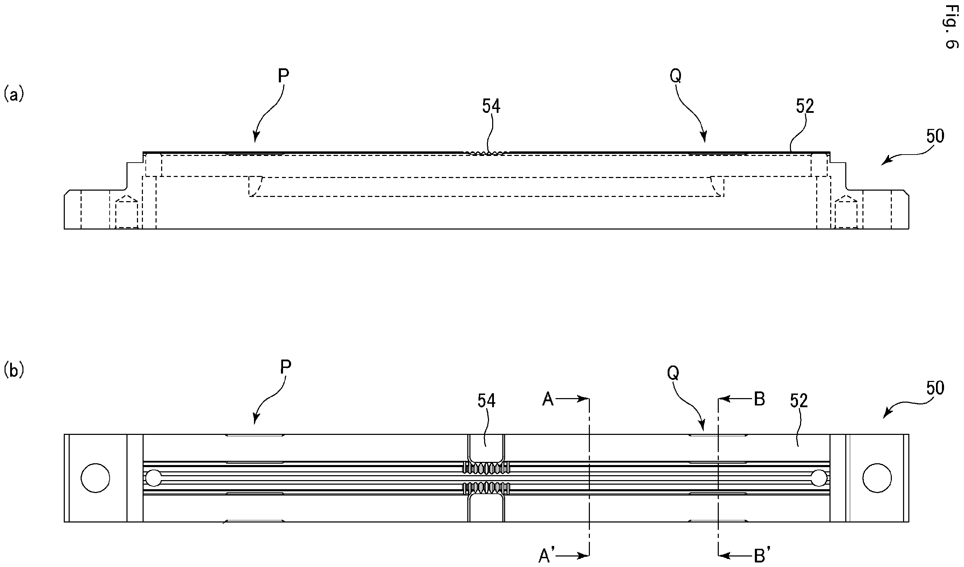

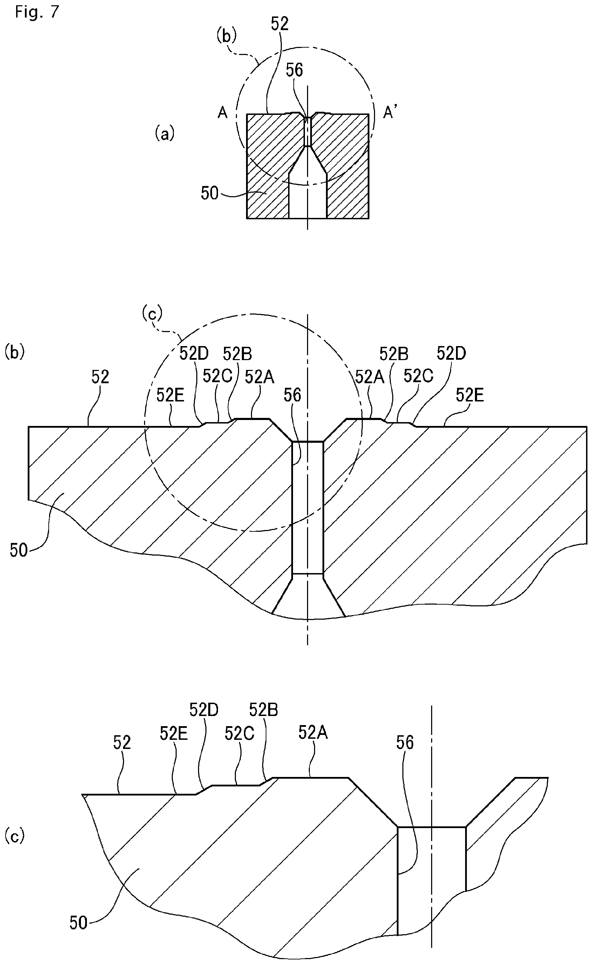

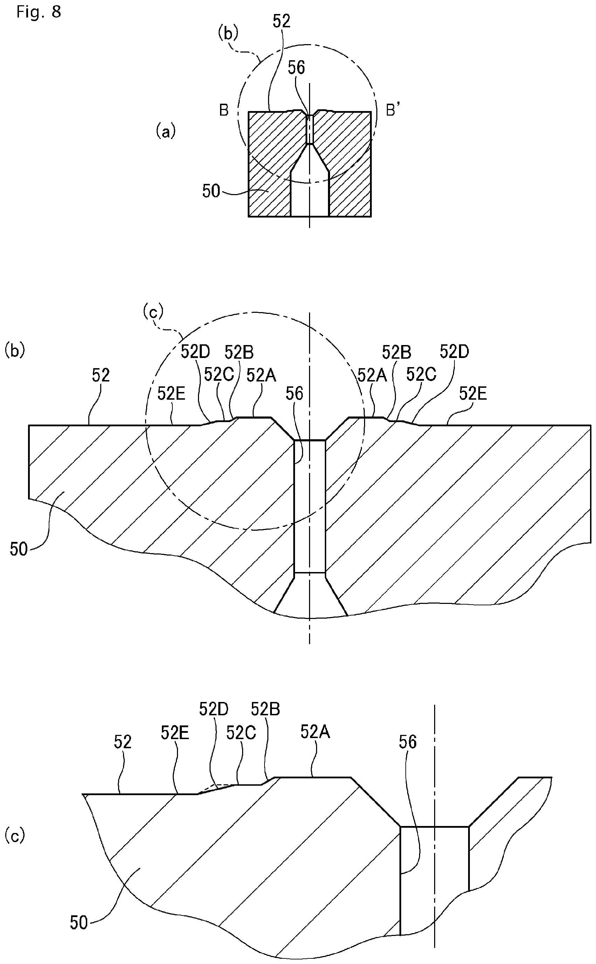

Next, the anvil 50 of the transverse sealing device 10 in the packaging and filing device will be described in detail with fig. 6 to 9. Fig. 6(a) is a front view of the anvil 50 and fig. 6(b) is a plan view of the anvil 50. Fig. 7 is a view showing a cross section of the anvil 50 along the line A-A', and fig. 8 is a view showing a cross section of the anvil 50 along the line B-B'.

As shown in fig. 6, the rectangular supporting surface 52 is formed on the anvil 50 of the transverse sealing device 10 in the packaging and filing device.

The shape of the regions of the supporting surface 52 of the anvil 50 as a support jig for gripping the edge portions of the packaging laminate material 1, is partially modified. As shown in fig. 6, the shape in the regions P, Q which are at a predetermined distance from the center of the supporting surface 52 of the anvil 50 is partially modified.

The cross-sectional shape of the anvil 50 is shown in fig. 7 and fig. 8. Fig. 7 shows the basic cross-sectional shape of the supporting surface 52 of the anvil 50. Fig. 8 shows the cross-sectional shape of the modified portion of regions P, Q of the supporting surface 52 of the anvil 50.

Fig. 7(a) and fig. 8(a) show the cross section of the entire anvil 50; fig. 7(b) and fig. 8(b) show a partial cross section which is an enlargement of fig. 7(a) and fig. 8(a); and fig. 7(c) and fig. 8(c) show a partial cross section which is a further enlargement of fig. 7(b) and fig. 8(b).

A contact portion 52A which directly contacts the packaging laminate material 1, is provided on both left and right sides of a cutting blade through-hole 56 for the cutting blade 60, on the supporting surface 52 of the anvil 50. The packaging laminate material 1 is gripped by the contact portion 52A and the ultrasonic horn 40, and the portion of the packaging laminate material in contact with the contact portion 52A is transversely sealed by ultrasound.

As shown in fig. 7, the basic cross-sectional shape of the supporting surface 52 of the anvil 50 includes a flat portion 52C connected an inclined portion 52B adjacent to the contact portion 52A, and a flat portion 52E further connected an inclined portion 52D on portions adjacent to the contact portion 52A on the opposite side to the cutting blade through-hole 56.

Meanwhile, as shown in fig. 8, the cross-sectional shape of the supporting surface 52 of the anvil 50 in the regions P, Q includes the flat portion 52C connected to the inclined portion 52B and the flat portion 52E further connected the inclined portion 52D on portions adjacent to the contact portion 52A on the opposite side to the cutting blade through-hole 56. In the regions P, Q, the width of the flat portion 52C is smaller than that of the basic cross-sectional shape, and the width of the inclined portion 52D is larger than that of the basic cross-sectional shape so as to produce a more gentle inclination. In fig. 8, for comparison, the basic cross-sectional shape is shown by the broken lines.

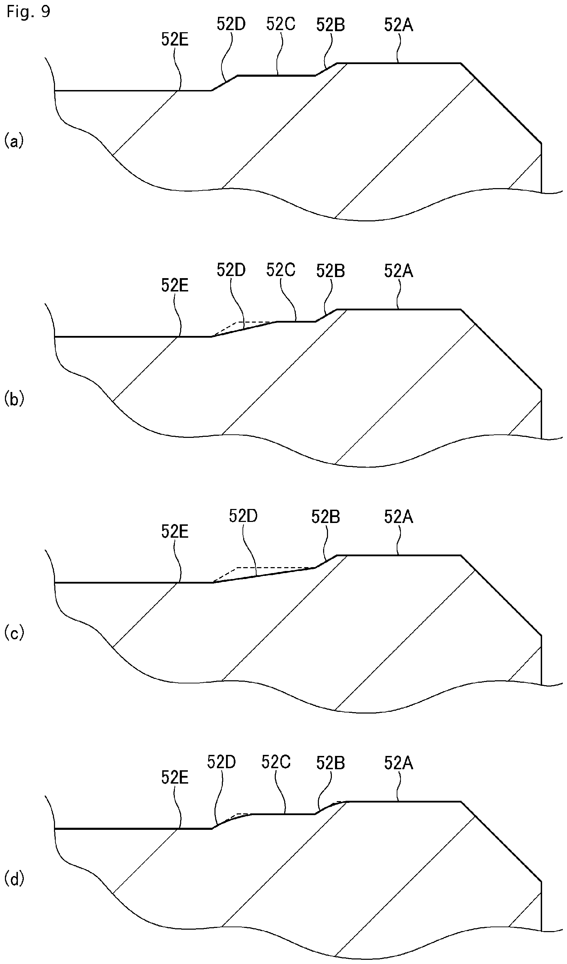

The details of the shape of the supporting surface 52 of the anvil 50 is shown in fig. 9. Fig. 9 shows a partial cross section which is a further enlargement of the anvil 50.

Fig. 9(a) corresponds to fig. 7 and shows the basic cross-sectional shape of the supporting surface 52 of the anvil 50.

In fig. 9(a), the width of the contact portion 52A of the supporting surface 52 of the anvil 50 is 1.0 mm, for example. The flat portion 52C is parallel to the surface of the contact portion 52A and is lower by 0.10 mm than the contact portion 52A, for example; the width of the flat portion 52C is 1.0 mm, for example. The inclined portion 52B is positioned between the contact surface 52A and the flat portion 52C. The angle of inclination of the inclined portion 52B is 30°, for example, and the width of the inclined portion 52B is 0.10 mm, for example. The flat portion 52E is parallel to the surfaces of the contact portion 52A and the flat portion 52C and is lower by 0.10 mm than the flat portion 52C, for example; the inclined portion 52D is positioned between the flat portion 52C and the flat portion 52E. The angle of inclination of the inclined portion 52D is 30°, for example. The width of the inclined portion 52D is 0.10 mm, for example.

Fig. 9(b) corresponds to fig. 8 and shows the cross-sectional shape of the supporting surface 52 of the anvil 50 in the regions P, Q. The basic cross-sectional shape is shown by a broken line in fig. 9(b).

In fig. 9(b), the width of the contact portion 52A of the supporting surface 52 of the anvil 50 is 0.5-3.0 mm, for example. The flat portion 52C is parallel to the surface of the contact portion 52A and is lower by 0.05-0.20 mm than the contact portion 52A, for example; the width of the flat portion 52C is less than that of the basic cross-sectional shape and is 0.5-1.5 mm, for example. The inclined portion 52B is positioned between the contact surface 52A and the flat portion 52C. The angle of inclination of the inclined portion 52B is slightly more gentle than that of the basic cross-sectional shape and is 15-25°, for example; the width of the inclined portion 52B is 0.05-0.20 mm, for example. The flat portion 52E is parallel to the surfaces of the contact portion 52A and the flat portion 52C and is lower by 0.05-0.20 mm than the flat portion 52C, for example. The inclined portion 52D is positioned between the flat portion 52C and the flat portion 52E. The angle of inclination of the inclined portion 52D is more gentle than that of the basic cross-sectional shape and is 15-25°, for example. The width of the inclined portion 52D is 0.10-0.20 mm, for example.

As is clear from comparing fig. 9(a) and fig. 9(b), the regions P, Q of the supporting surface 52 of the anvil 50 are different from the other regions and the inclined portion 52D has a gentle angle of inclination.

The edge portions of the packaging laminate material 1 are gripped in the regions P, Q of the supporting surface 52 of the anvil 50. Conventionally, the packaging laminate material 1 is gripped in a bent manner at the edge portions of the packaging laminate material 1, so agglomerated polyethylene is likely to be formed during transverse sealing. When agglomerated polyethylene is formed, micro-defects are formed due to pinholes.

According to this embodiment, the angle of inclination of the inclined portion 52D in the regions P, Q of the supporting surface 52 of the anvil 50 is made more gentle, and as a result the formation of agglomerated polyethylene during transverse sealing is prevented. This prevents the formation of micro-defects due to pinholes.

Extensive research carried out by the inventors of this application showed that when angled portions are formed on portions adjacent to the contact portion 52A of the supporting surface 52 of the anvil 50, agglomerated polyethylene is likely to be formed during transverse sealing at the edge portions of the packaging laminate material 1.

According to this embodiment, the width of the flat portion 52C is smaller than that of the basic cross-sectional shape, and the angle of inclination of the inclined portion 52D is more gentle than that of the basic cross-sectional shape, so it is possible to ensure that there is no angled portion in the region adjacent to the contact portion 52A of the supporting surface 52 of the anvil 50 and the formation of agglomerated polyethylene during transverse sealing at the edge portions of the packaging laminate material 1 is prevented.

The shape of the portion adjacent to the contact portion 52A of the supporting surface 52 of the anvil 50 is not limited to that shown in fig. 9(b), provided that it is possible to ensure that there is no angled portion.

As shown in fig. 9(c), for example, it is equally possible to form the flat portion 52E from the contact surface 52A, by way of the inclined portions 52B, 52D, without the flat portion 52C. The basic cross-sectional shape is shown by a broken line in fig. 9(c). Since there is no flat portion 52C, the inclined portion 52D is positioned between the inclined portion 52B and the flat portion 52E. The angle of inclination of the inclined portion 52D is even more gentle than that of the basic cross-sectional shape and is 10-20°, for example. The width of the inclined portion 52D is 1.0-3.0 mm, for example.

Furthermore, a cross-sectional shape such as that shown in fig. 9(d) is possible in this embodiment. The basic cross-sectional shape is shown by a broken line in fig. 9(d). The overall cross-sectional shape is such that the inclined portion 52B, flat portion 52C, inclined portion 52D, and flat portion 52E are provided on portions adjacent to the contact portion 52A on the opposite side to the cutting blade through-hole 56, and the angular portion between the contact portion 52A and the inclined portion 52B and the angular portion between the flat portion 52C and the inclined portion 52D are rounded. The angular portion between the contact portion 52A and the inclined portion 52B has a round chamfering with a diameter of 5.0-10.0 mm, for example, and the angular portion between the flat portion 52C and the inclined portion 52D has a round chamfering with a diameter of 5.0-10.0 mm, for example.

This embodiment thus makes it possible to achieve favorable transverse sealing without agglomerated polyethylene being formed during transverse sealing of a packaging laminate material by ultrasonic sealing.

### Variant Embodiment

The present invention is not limited to the embodiment described above and various modifications are possible.

For example, in the embodiment described above, the cross-sectional shape of the anvil differs in the regions P, Q which constitute partial regions of the anvil, but this is not limiting. The cross-sectional shape of the anvil may equally be made different in regions of the anvil other than the regions P, Q. Furthermore, the cross-sectional shape of the anvil may equally have a cross-sectional shape such as that of the regions P, Q over all regions of the anvil.

Furthermore, in the embodiment described above, the present invention was applied to transverse sealing, and the present invention may equally be applied to sealing in other locations, such as longitudinal sealing.

### Reference Numbers

1... Packaging laminate material
2... Strip
3... Strip adhesion device
7... Filling pipe
8... Longitudinal sealing device
10... Transverse sealing device
13... Pre-molded container
14... Packaging container
15... Final molding conveyance device
16... Sterile compartment
30... Upper chamber
33... Air knife
37... Forming ring
40... Ultrasonic horn
42... Ultrasound supply surface
44... Piezoelectric element
46... Air compartment 46
50... Anvil
52... Supporting surface
52A... Contact portion
52B... Inclined portion
52C... Flat portion
52D... Inclined portion
52E... Flat portion
54... Recess
56... Cutting blade through-hole
60... Cutting blade

## Claims

1. A packaging and filing device for filling a liquid food using a band-shaped packaging material to form a packaging container filled with the liquid food, said packaging and filing device comprising:
a sealing device including an ultrasound supply unit for supplying ultrasound and an anvil as a support jig, wherein
the band-shaped packaging material is gripped by an ultrasound supply surface of the ultrasound supply unit and a supporting surface of the anvil,
ultrasound is applied to the band-shaped packaging material to seal the band-shaped packaging material, and
the supporting surface of the anvil has a smooth shape so that an angular portion of a region is smooth, said region being adjacent to a contact part which contacts the band-shaped packaging material during sealing.

2. The packaging and filing device according to claim 1, wherein the smooth shape is a vertical angle of the angular portion, said vertical angle of the angular is within a range of 155-175°.

3. The packaging and filing device according to claim 1 or 2, wherein the angular portion is beveled.

4. The packaging and filing device according to any one of claims 1 to 3, wherein a predetermined region constituting part of the supporting surface of the anvil constitutes the smooth shape.

5. The packaging and filing device according to claim 4, wherein the predetermined regions are two regions for gripping edge portions of the band-shaped packaging material, said two regions being separated by a predetermined distance from a center of the supporting surface of the anvil.

6. The packaging and filing device according to any one of claims 1 to 5, wherein
the sealing device seals the band-shaped packaging material in a direction orthogonal to the lengthwise direction of the band-shaped packaging material.
